# EUROPEAN PATENT APPLICATION

(11) **EP 4 734 640 A1**
(43) Date of publication of application: **29.04.2026**
(21) Application number: 23942679.4
(22) Date of filing: 25.06.2023
(51) Int. Cl.: H04W 72/231, H04W 4/70

(54) **INFORMATION PROCESSING METHOD, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/102199
(87) International publication number: WO 2025/000146

(57) **Abstract**

The embodiments of the present disclosure relate to an information processing method, a communication device, a communication system and a storage medium. The information processing method comprises: a network device sending a first signal, wherein the first signal comprises first instruction information, which first instruction information is used for instructing to perform missed-disk inventory on a first device, and the first signal is used for the first device to determine whether to send a second signal. In this way, a network device can perform missed-disk inventory detection on a first device, thereby reducing the probability of there being a disk missing.

## Description

### TECHNICAL FIELD

The present disclosure relates to a field of communication technology, and more particularly to a method for processing information, a network device, a first device, a communication system, and a storage medium.

### BACKGROUND

In a field of communication technology, some Internet of Things (IoT) devices may collect environmental energy for power supply. For example, these IoT devices may typically provide energy by collecting radio waves, light, motion, heat, or any other suitable power source.

### SUMMARY

Embodiments of the present disclosure aim to solve the problem of inventory of the first device.

The embodiments of the present disclosure provide a method for processing information, a network device, a first device, a communication system, and a storage medium.

According to a first aspect of the present disclosure, a method for processing information is proposed and the method includes:
sending, by a network device, a first signal; where the first signal includes first indication information, and the first indication information is configured to indicate performing missing inventory on a first device; the first signal is used by the first device to determine whether to send a second signal.

According to a second aspect of the present disclosure, a method for processing information is proposed, and the method includes:
receiving, by a first device, a first signal; where the first signal includes first indication information, and the first indication information is configured to indicate performing missing inventory on the first device;
determining, based on the first signal, whether to send a second signal.

According to a third aspect of the present disclosure, a method for processing information is proposed, and the method includes:
sending, by a network device, a first signal to the first device, where the first signal includes first indication information, and the first indication information is configured to indicate performing missing inventory on the first device;
determining, by the first device, based on the first signal, whether to send a second signal to the network device.

According to a fourth aspect of the present disclosure, a network device is proposed, including:
a first transceiver module, configured to send a first signal, where the first signal includes first indication information, and the first indication information is configured to indicate performing missing inventory on the first device; the first signal is used by the first device to determine whether to send a second signal.

According to a fifth aspect of the present disclosure, a first device is proposed, including:
a second transceiver module, configured to receive the first signal; where the first signal includes first indication information, and the first indication information is used to perform missing inventory on the first device; and
a second processing module, configured to determine, based on the first signal, whether to send a second signal.

According to a sixth aspect of the present disclosure, a network device is proposed, including: one or a plurality of processors; where the network device is configured to perform an optional implementation method as described in the first aspect.

According to a seventh aspect of the present disclosure, a first device is proposed, including: one or a plurality of processors; where the first device is configured to perform an optional implementation method as described in the second aspect.

According to an eighth aspect of the present disclosure, a communication system is proposed, including: a network device and a first device; where the network device is configured to perform the method described in the first aspect, and the first device is configured to perform the method described in the second aspect.

According to a ninth aspect of the present disclosure, a storage medium is proposed, where the storage medium stores instructions, and when the instructions are performed on a communication device, the communication device performs the method described in the first aspect, the second aspect, the third aspect, or an optional implementation of the first aspect, the second aspect, and the third aspect.

The embodiments of the present disclosure may reduce the problem of missing inventory in the first device and save resources.

### BRIEF DESCRIPTION OF THE DRAWINGS

In order to more clearly illustrate the technical solutions in the embodiments of the present disclosure, the accompanying drawings required for describing the embodiments are introduced below, and the following drawings are merely some embodiments of the present disclosure and do not impose specific limitations on the protection scope of the present disclosure.
FIG. 1A is a schematic diagram of a structure of a system for processing information according to an embodiment of the present disclosure.
FIG. 1B is a schematic diagram of backscatter according to an embodiment of the present disclosure.
FIG. 1C is a schematic diagram of a network topology architecture according to an embodiment of the present disclosure.
FIG. 1D is a schematic diagram of a network topology architecture according to an embodiment of the present disclosure.
FIG. 1E is a schematic diagram of a network topology architecture according to an embodiment of the present disclosure.
FIG. 1F is a schematic diagram of a network topology architecture according to an embodiment of the present disclosure.
FIG. 1G is a schematic diagram of an ambient IoT type according to an embodiment of the present disclosure.
FIG. 2 is an interactive schematic diagram of a method for processing information according to an embodiment of the present disclosure.
FIG. 3A is a flow schematic diagram of a method for processing information according to an embodiment of the present disclosure.
FIG. 3B is a flow schematic diagram of a method for processing information according to an embodiment of the present disclosure.
FIG. 3C is a flow schematic diagram of a method for processing information according to an embodiment of the present disclosure.
FIG. 4A is a flow schematic diagram of a method for processing information according to an embodiment of the present disclosure.
FIG. 4B is a flow schematic diagram of a method for processing information according to an embodiment of the present disclosure.
FIG. 4C is a flow schematic diagram of a method for processing information according to an embodiment of the present disclosure.
FIG. 5 is a flow schematic diagram of a method for processing information according to an embodiment of the present disclosure.
FIG. 6 is a schematic diagram of a method for processing information according to an embodiment of the present disclosure.
FIG. 7A is a structural schematic diagram of a first device according to an embodiment of the present disclosure.
FIG. 7B is a structural schematic diagram of a network device according to an embodiment of the present disclosure.
FIG. 8A is a structural schematic diagram of a communication device according to an embodiment of the present disclosure.
FIG. 8B is a structural schematic diagram of a chip according to an embodiment of the present disclosure.

### DETAILED DESCRIPTION

The embodiments of the present disclosure provide a method for processing information, a network device, a first device, a communication system, and a storage medium.

In a first aspect, the embodiments of the present disclosure propose a method for processing information, including:
a network device sending a first signal; where the first signal includes first indication information, and the first indication information is configured to indicate performing missing inventory on the first device; the first signal is used by the first device to determine whether to send a second signal.

In the above embodiment, this allows the network device to perform missing inventory check on the first device, thus reducing the probability of missing inventory.

In conjunction with some embodiments of the first aspect, in some embodiments, the first signal further includes at least one of the following:
a task identifier, where the task identifier is configured to identify an inventory task;
an inventory value tag, where the inventory value tag is configured to indicate whether the current inventory is the repeatedly-triggered inventory task.

In the above embodiment, by using the task identifier and/or the inventory value tag, the first device may accurately know whether the current inventory is the repeatedly-triggered inventory task, thereby facilitating the first device to determine whether the first device itself is a device for the missing inventory.

In conjunction with some embodiments of the first aspect, in some embodiments, the inventory value tag remains unchanged, configured to indicate that the current inventory is the repeatedly-triggered inventory task; or, the inventory value tag increases by a first value, configured to indicate that the current inventory is a re-triggered inventory task; the first value being an integer greater than 0;
or, the inventory value tag is a second value, configured to indicate that the current inventory is the repeatedly-triggered inventory task; or, the inventory value tag is a third value, configured to indicate that the current inventory is a re-triggered inventory task.

In the above embodiments, the inventory value tag may enable the first device to accurately know whether the current inventory is the repeatedly-triggered inventory task, thereby facilitating the first device to determine whether the first device itself is a device for the missing inventory.

In conjunction with some embodiments of the first aspect, in some embodiments, the first signal includes at least one of the following:
a time threshold value;
first time information, configured to indicate a first time of the current inventory; or
second time information, configured to indicate a second time of the most recent inventory.

In the above embodiments, the first device may accurately know whether the current inventory is the repeatedly-triggered inventory task based on at least one of the time threshold value, the first time of the current inventory, or the second time of the most recent inventory, thereby facilitating the first device to determine whether the first device itself is a device for the missing inventory.

In conjunction with some embodiments of the first aspect, in some embodiments, the first signal further includes at least one of:
second indication information, where the second indication information is configured to indicate information of the first device performing the missing inventory;
a service group identifier, where the service group identifier is configured to indicate the group to which the inventory task belongs;
a device group identifier, where the device group identifier is configured to indicate the group to which the first device belongs.

In the above embodiments, the first device may know information such as the members of the missing inventory, the group to which the inventory task belongs, and/or the group to which the first device belongs, thereby further facilitating the first device to determine whether the first device itself is a device for the missing inventory.

In conjunction with some embodiments of the first aspect, in some embodiments, the first signal is carried in at least one of the following:
a Media Access Control (MAC) header;
a Media Access Control payload (MAC payload);
a Media Access Control (MAC) Control Element (CE); or
a Radio Resource Control (RRC) message.

In the above embodiments, the signaling of at least one of the MAC header, MAC payload, MAC CE, or RRC message may be reused to carry the first signal, thereby improving the utilization of these signals.

In conjunction with some embodiments of the first aspect, in some embodiments, before sending the first signal, the method further includes:
sending a third signal, where the third signal is configured to trigger the first device to send a fourth signal; and
based on the received fourth signal, determining a quantity of first devices.

In the above embodiments, a quantity inventory of at least one first device may be implemented.

In conjunction with some embodiments of the first aspect, in some embodiments, the third signal includes first sequence information; and/or, the fourth signal includes second sequence information.

In the above embodiments, the network device may send the sequence information to the first device and the first device may return the sequence information to the network device, thereby accurately implementing the quantity inventory detection.

In conjunction with some embodiments of the first aspect, in some embodiments, the first sequence information includes at least one of: a first sequence, and a first sequence index corresponding to the first sequence; and/or, the second sequence information includes at least one of: a second sequence corresponding to the first sequence, a second sequence corresponding to the first sequence index, a default second sequence index, a third sequence index configured by the network device, a third sequence configured by the network device, a fourth sequence pre-configured by the first device, and a fifth sequence; the fifth sequence is determined by the first device through cyclic shifting based on the first sequence and/or an identification of the first device.

In the above embodiments, the sequence information may be sent from the network device to the first device and returned from the first device to the network device in various ways, thereby applying to more application scenarios.

In conjunction with some embodiments of the first aspect, in some embodiments, the method includes: storing first information, where the first information is configured to indicate at least one of the following:
at least one first sequence and at least one first sequence index;
a corresponding relationship between a first sequence and a first sequence index;
a corresponding relationship between first sequence information and second sequence information.

In the above embodiments, the network device may accurately determine the first sequence index according to the first sequence, or accurately determine the first sequence b according to the first sequence index; the network device may also accurately determine whether the second sequence information returned by the first device corresponds to the first sequence information sent by the network device, thereby facilitating the implementation of the quantity inventory of at least one first device by the network device.

In conjunction with some embodiments of the first aspect, in some embodiments, the third signal further includes: third indication information, where the third indication information is configured to indicate performing a quantity inventory on the first device.

In the above embodiments, the network device may inform the first device to perform a quantity inventory, thereby facilitating the first device to respond.

In conjunction with some embodiments of the first aspect, in some embodiments, the third signal is carried in at least one of: an MAC header, an MAC payload, an MAC CE, or an RRC message.

In the above embodiments, the signaling of at least one of the MAC header, MAC payload, MAC CE, or RRC message may be reused to carry the first signal, thereby improving the utilization of these signals.

In a second aspect, the embodiments of the present disclosure propose a method for processing information, including:
receiving, by a first device, a first signal; where the first signal includes first indication information, and the first indication information is configured to indicate performing missing inventory on the first device; and
determining, based on the first signal, whether to send a second signal.

In the above embodiments, the first device may determine based on the first signal whether the first device itself has been inventoried; if the first device has not been inventoried, the first device may send a second signal, thereby reducing the probability of missing inventory; if the first device has already been inventoried, the first device may refrain from sending the second signal, thus reducing power consumption, lowering interference, and saving radio resources.

In conjunction with some embodiments of the second aspect, in some embodiments, the first signal includes at least one of the following:
a task identifier, where the task identifier is configured to identify an inventory task;
an inventory value tag, where the inventory value tag is configured to indicate whether the current inventory is a repeatedly-triggered inventory task.

In conjunction with some embodiments of the second aspect, in some embodiments, determining whether to send the second signal based on the first signal includes at least one of the following:
based on at least one of the task identifier or the inventory value tag, determining that the current inventory is the repeatedly-triggered inventory task, and determining not to send the second signal;
based on at least one of the task identifier or the inventory value tag, determining that the current inventory is a re-triggered inventory task, and determining to send the second signal.

In conjunction with some embodiments of the second aspect, in some embodiments, the first signal includes at least one of the following: a time threshold value; first time information, configured to indicate a first time of the current inventory; or second time information, configured to indicate a second time of the most recent inventory.

In conjunction with some embodiments of the second aspect, in some embodiments, determining whether to send the second signal based on the first signal includes at least one of the following:
based on a difference between a fourth time and a third time being greater than or equal to the time threshold value, determining to send the second signal; or
based on a difference between a fourth time and a third time being less than the time threshold value, determining not to send the second signal;
the third time is a time after the first device completes the most recent inventory task, and the fourth time is a time when the first device completes the most recent inventory task and powers off, then powers on again; or, the third time is a time when the first device receives the first signal, and the fourth time is a time when the first device receives the third signal.

In conjunction with some embodiments of the second aspect, in some embodiments, determining whether to send the second signal based on the first signal includes at least one of the following:
based on a fifth time of the most recent inventory recorded by the first device being the same as the second time, determining not to send the second signal; or
based on a fifth time of the most recent inventory recorded by the first device being different from the first time, determining not to send the second signal; or
based on a fifth time of the most recent inventory recorded by the first device being different from the second time, determining to send the second signal.

In conjunction with some embodiments of the second aspect, in some embodiments, the first signal further includes at least one of the following:
second indication information, where the second indication information is configured to indicate information of the first device performing the missing inventory;
a service group identifier, where the service group identifier is configured to indicate the group to which the inventory task belongs; or
a device group identifier, where the device group identifier is configured to indicate the group to which the first device belongs.

In conjunction with some embodiments of the second aspect, in some embodiments, the first signal is carried in at least one of the following: an MAC header, an MAC payload, an MAC CE, or an RRC message.

In conjunction with some embodiments of the second aspect, in some embodiments, the method further includes:
receiving a third signal; and
based on the third signal, sending a fourth signal; the fourth signal is used by the network device to determine a quantity of first devices.

In conjunction with some embodiments of the second aspect, in some embodiments, the third signal includes first sequence information; and/or, the fourth signal includes second sequence information.

In conjunction with some embodiments of the second aspect, in some embodiments, the first sequence information includes at least one of the following: a first sequence, or a first sequence index corresponding to the first sequence; and/or,
the second sequence information includes at least one of the following: a second sequence corresponding to the first sequence, a second sequence corresponding to the first sequence index, a default second sequence index, a third sequence index configured by the network device, a third sequence configured by the network device, a fourth sequence pre-configured by the first device, and a fifth sequence; the fifth sequence is determined by the first device based on the first sequence and/or an identification of the first device through cyclic shifting.

In conjunction with some embodiments of the second aspect, in some embodiments, the third signal further includes: third indication information, where the third indication information is configured to indicate performing a quantity inventory on the first device.

In conjunction with some embodiments of the second aspect, in some embodiments, sending the fourth signal includes: based on a measurement value of a reference signal measured by the first device being greater than or equal to a threshold value configured by the network device, sending the fourth signal.

In conjunction with some embodiments of the second aspect, in some embodiments, the third signal is carried in at least one of the following: an MAC header, an MAC payload, an MAC CE, or an RRC message.

In a third aspect, the embodiments of the present disclosure propose a method for processing information, including:
sending, by a network device, a first signal to the first device, where the first signal includes first indication information, and the first indication information is configured to indicate performing missing inventory on the first device; and
determining, by the first device, whether to send a second signal to the network device based on the first signal.

In conjunction with some embodiments of the third aspect, in some embodiments, the method further includes:
sending, by the network device, a third signal to the first device;
determining, by the first device, to send a fourth signal based on the third signal; and
determining, by the network device, a quantity of first devices based on the fourth signal.

In a fourth aspect, the embodiments of the present disclosure propose a network device, including:
a first transceiver module, configured to send a first signal, where the first signal includes first indication information, and the first indication information is configured to indicate performing missing inventory on the first device; the first signal is used by the first device to determine whether to send a second signal.

In a fifth aspect, the embodiments of the present disclosure propose a first device, including:
a second transceiver module, configured to receive a first signal; where the first signal includes first indication information, and the first indication information is used to perform missing inventory on a first device; and
a second processing module, configured to determine, based on the first signal, whether to send a second signal.

In a sixth aspect, the embodiments of the present disclosure propose a network device, including: one or a plurality of processors; where the network device is configured to perform an optional implementation method as described in the first aspect.

In a seventh aspect, the embodiments of the present disclosure propose a first device, including: one or a plurality of processors; where the first device is configured to perform an optional implementation method as described in the second aspect.

In an eighth aspect, the embodiments of the present disclosure propose a communication system, including: a network device and a first device; where the network device is configured to perform the method described in the first aspect, and the first device is configured to perform the method described in the second aspect.

In a ninth aspect, the embodiments of the present disclosure propose a storage medium, where the storage medium stores instructions, and when these instructions are performed on a communication device, the communication device performs the method described in the first aspect, the second aspect, the third aspect, or an optional implementation of the first aspect, the second aspect, and the third aspect.

In a tenth aspect, the embodiments of the present disclosure propose a program product, where when the program product is performed by a communication device, the communication device performs the method described in the first aspect, the second aspect, the third aspect, or an optional implementation of the first aspect, the second aspect, and the third aspect.

In an eleventh aspect, the embodiments of the present disclosure propose a computer program, where when the computer program runs on a computer, the computer performs the method described in the first aspect, the second aspect, the third aspect, or an optional implementation of the first aspect, the second aspect, and the third aspect.

In a twelfth aspect, the embodiments of the present disclosure propose a chip or a chip system; the chip or chip system includes a processing circuit, configured to perform the method described in the optional embodiments of the first aspect, second aspect, and third aspect.

It may be understood that the first device, the network device, the communication system, the storage medium, the program product, the computer program, the chip or chip system are all used to perform the method provided by the embodiments of the present disclosure. Therefore, the beneficial effects they may achieve may be referenced from the beneficial effects in the corresponding methods, which will not be repeated here. The aforementioned communication device may include the first device and/or the network device.

The embodiments of the present disclosure propose a method for processing information, a first device, a network device, a communication system, and a storage medium. In some embodiments, the terms of "method for processing information" and "communication method" may be used interchangeably, the terms of "apparatus for processing information" and "communication apparatus" be used interchangeably, and the terms of "system for processing information" and "communication system" may be used interchangeably.

The embodiments of the present disclosure are not exhaustive, but merely illustrative of some embodiments, and are not intended to limit specifically the protection scope of the present disclosure. Where there is no contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily interchanged. In addition, the optional implementations in a certain embodiment may be arbitrarily combined. In addition, the embodiments may be arbitrarily combined. For example, some or all steps of different embodiments may be arbitrarily combined, and a certain embodiment may be arbitrarily combined with the optional implementations of other embodiments.

In all embodiments of the present disclosure, unless otherwise specified or logically conflicting, the terminology and/or descriptions are consistent across embodiments and may be referenced interchangeably. Technical features from different embodiments may be combined to form new embodiments based on their inherent logical relationships.

The terminology used in these embodiments is for the purpose of describing specific embodiments only and is not intended to limit the present disclosure.

In embodiments of the present disclosure, unless otherwise specified, elements expressed in the singular form, such as "a", "an", "the", "above", "said", "aforementioned", "this", etc., may mean "one and only one", "one or more", or "at least one" etc. For example, when using articles such as "a", "an", and "the" in the translation, the noun following the article may be understood as either a singular expression or a plural expression.

In embodiments of the present disclosure, "multiple" refers to two or more.

In some embodiments, terms such as "at least one of", "at least one item of", "at least one", "one or more", "a plurality of", and "multiple" may be used interchangeably.

In some embodiments, expressions such as "at least one of A and B", "A and/or B", "in the case of A, and in another case of B", and "in response to a case A, and in response to another case B" can, depending on the context, include the following technical solutions: in some embodiments, A (performed regardless of B); in some embodiments, B (performed regardless of A); in some embodiments, execution is performed selectively from A and B (A and B are selectively performed); and in some embodiments, both A and B are performed. The same applies when there are more branches such as A, B, and C.

In some embodiments, the expression "A or B" can, depending on the context, include the following technical solutions: in some embodiments, A (performed regardless of B); in some embodiments, B (performed regardless of A); in some embodiments, execution is performed selectively from A and B (A and B are selectively performed). The same applies when there are more branches such as A, B, and C.

The prefixes such as "first" and "second" in the embodiments of the present disclosure are only for distinguishing different descriptive objects and do not constitute restrictions on the positions, orders, priority, quantity, or contents of the descriptive objects. For the statements of the descriptive objects, please refer to the claims or the description in the context of the embodiments. The use of prefixes should not constitute unnecessary restrictions. For example, if the descriptive object is a "field", then the ordinal numbers before "field" in the "first field" and the "second field" do not restrict the position or the order between the "fields", and the "first" and the "second" do not restrict whether the "fields" they modify are in the same message, nor do they restrict the order of the "first field" and the "second field." For another example, if the descriptive object is a "level", then the ordinal numbers before "level" in the "first level" and the "second level" do not restrict the priority between "levels". In addition, the number of objects described is not limited by the ordinal number, it may be one or more. For example, in the "first device", the number of "devices" may be one or more. In addition, objects modified by different prefixes may be the same or different. For example, if the object is described as "device", then the "first device" and the "second device" may be the same device or different devices, and their types may be the same or different. Similarly, if the object is described as "information", then the "first information" and the "second information" may be the same information or different information, and their contents may be the same or different.

In some embodiments, "including A", "containing A", "for indicating A", and "carrying A" may be interpreted as directly carrying A or indirectly indicating A.

In some embodiments, terms such as "in response to... ", "in response to determining... ", "in the case of...", "when... ", "if...", etc., may be interchanged.

In some embodiments, terms such as "greater than", "greater than or equal to", "not smaller than", "more than", "more than or equal to", "not less than", "higher than", "higher than or equal to", "not lower than", and "above" are interchangeable. Terms such as "smaller than", "smaller than or equal to", "not greater than", "less than", "less than or equal to", "not more than", "lower than", "lower than or equal to", "not higher than", and "below" are interchangeable.

In some embodiments, "device" may be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", and "body" are interchangeable.

In some embodiments, the "network" may be interpreted as devices included in the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" are interchangeable.

In some embodiments, terms such as "terminal", "terminal device", "user equipment (UE)", "user terminal", and "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" are interchangeable.

In some embodiments, the access network device, the core network device, or the network device may be replaced with the terminal. For example, the communication between the access network device, the core network device, or the network device and the terminal may be replaced with communication between multiple terminals (e.g., also referred to as device-to-device (D2D), vehicle-to-everything (V2X), etc.). In this case, the terminal may also be configured such that a structure of the terminal may perform all or part of the functions of the access network device. In addition, terms such as "uplink" and "downlink" may be replaced with terms corresponding to inter-terminal communication (e.g., "sidelink"). For example, the uplink channel, the downlink channel, etc., may be replaced with the sidelink channel, and the uplink link, the downlink link, etc., may be replaced with the sidelink link.

In some embodiments, the terminal may be replaced with the access network device, the core network device, or the network device. In this case, the access network device, the core network device, or the network device may also be configured such that a structure of the access network device, the core network device, or the network device may perform all or part of the functions of the terminal.

In some embodiments, the obtaining of data, information, etc., may comply with the laws and regulations of the country where the location is situated.

In some embodiments, data, information, etc., may be acquired after obtaining user's consent.

In addition, each element, each row, or each column in the tables of the present disclosure may be implemented as an independent embodiment, and any combination of any element, any row, or any column may also be implemented as an independent embodiment.

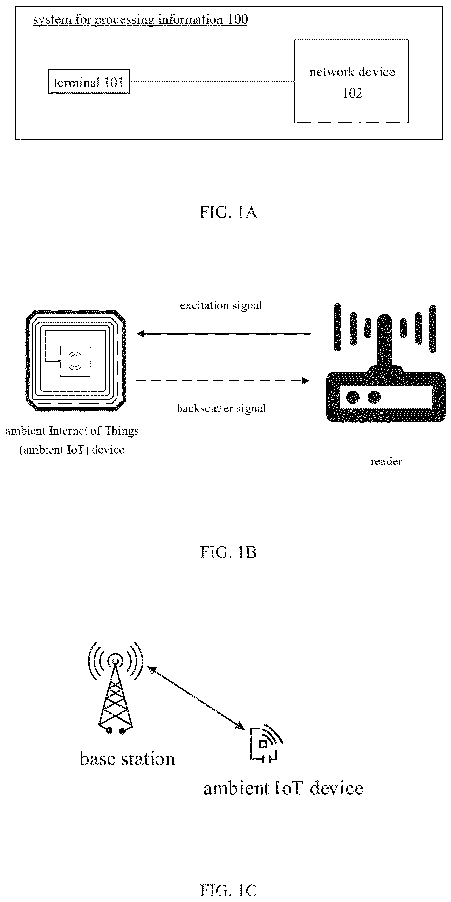

FIG. 1A is a schematic diagram of a structure of a system for processing information 100 according to embodiments of the present disclosure. As shown in FIG. 1A, the system for processing information 100 may include a terminal 101 and a network device 102.

In some embodiments, the network device 102 may include at least one of an access network device or a core network device.

In some embodiments, the terminal 101 includes, for example, at least one of the following: a mobile phone, a wearable device, an IoT device or terminal, a car with communication capabilities, a smart car, a pad, a computer with wireless transceiver capabilities, a VR (virtual reality) terminal device, an AR (augmented reality) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but it is not limited to these.

In some embodiments, the access network device is, for example, a node or device that connects the terminal to a wireless network. The access network device may include at least one of the following: an evolved Node B (eNB) in a 5G communication system, a next generation eNB (ng-eNB), a next generation NodeB (gNB), a node B (NB), a home node B (HNB), a home evolved nodeB (HeNB), a radio backhaul equipment, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, or an access node in the wireless fidelity (Wi-Fi) system, but it is not limited to these.

In some embodiments, the technical solutions of the present disclosure are applicable to Open RAN architectures. In this case, the interfaces between or within access network devices involved in the embodiments of the present disclosure may become internal interfaces of Open RAN. The processes and information interactions between these internal interfaces may be implemented through software or programs.

In some embodiments, the access network device may be composed of a central unit (CU) and a distributed unit (DU). The CU may also be referred to as a control unit. Using a CU-DU structure may separate the protocol layers of the access network device. Some protocol layer functions are centrally controlled by the CU, while the remaining part or all protocol layer functions are distributed in the DU, which is centrally controlled by the CU. However, the present disclosure is not limited to this.

In some embodiments, the core network equipment may be a single device, including a first network element, a second network element, etc., or the core network equipment may be multiple devices or a group of devices, each including all or part of the first network element and the second network element mentioned above. The network elements may be virtual or physical. The core network includes, for example, at least one of the Evolved Packet Core (EPC), the 5G Core Network (5GCN), or the Next Generation Core (NGC).

It should be understood that the system for processing information described in the embodiments of the present disclosure is for the purpose of more clearly illustrating the technical solutions of the embodiments of the present disclosure, and does not constitute a limitation on the technical solutions provided by the embodiments of the present disclosure. Those skilled in the art will recognize that, with the evolution of the system architecture and the emergence of new service scenarios, the technical solutions provided by the embodiments of the present disclosure are also applicable to similar technical problems.

The following embodiments of the present disclosure may be applied to the system for processing information 100 shown in FIG. 1A, or some of its entities, but are not limited to this. The entities shown in FIG. 1A are illustrative, the communication system may include all or some of the entities in FIG. 1A, or other components not shown in FIG. 1A. The number and form of each entity are arbitrary. The connection relationships between the entities are illustrative, the entities may be unconnected or connected, and the connection may be in any manner, including direct or indirect connections, wired or wireless connections.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSMTM), CDMA2000, Ultra Mobile Broadband (UMB), IEEE 802.11 (Wi-FiTM), IEEE 802.16 (WiMAXTM), IEEE 802.20, Ultra-Wide Band (UWB), BluetoothTM, Public Land Mobile Network (PLMN) network, Device-to-Device (D2D) system, Machine-to-Machine (M2M) system, Internet of Things (IoT) system, Vehicle-to-Everything (V2X) system, systems utilizing other communication methods, and next-generation systems built upon them, etc. In addition, multiple systems may be combined (e.g., a combination of LTE or LTE-A with 5G, etc.) and applied.

In some embodiments, in general, some IoT devices are powered by conventional batteries with a limited lifespan, negatively impacting user experience. The astronomical growth of IoT networks, coupled with the sheer number of IoT devices, has pushed maintenance expenses, including labor and battery costs, to an unprecedented level. Billions of conventional batteries are discarded annually, with only a fraction being effectively recycled, causing harmful impacts on the Earth's ecosystem. Maintaining the operation of IoT networks and replacing batteries may be extremely challenging under extreme ambient conditions. In this regard, battery-free IoT communication has been proposed, which will improve the performance and the sustainability of the network, and expand application scenarios. Furthermore, battery-free communication is more ambient friendly and safer for children and the elderly. By eliminating traditional batteries, the device size and the cost may be significantly reduced, paving the way for a variety of new applications.

In some embodiments, in the 5G era of the 5th generation mobile communication technology, various Low Power Wide Area (LPWA) technologies have been developed, such as Machine Type Communication (MTC), Narrow Band Internet of Things (NB-IoT), and Reduced Capability (RedCap), etc., to meet the growing needs of vertical industries. These LPWA technologies achieve low cost, low power consumption, and massive connectivity, meeting the requirements of many applications. However, many use cases and applications remain unresolved. First, devices powered by traditional batteries are unsuitable, for example, under extreme ambient conditions (e.g., high pressure, extremely high/low temperatures, humid environments). Second, maintenance-free devices are required (e.g., devices without the need to replace traditional batteries). Finally, there is a need for ultra-low complexity, very small device size/shape factor (e.g., thickness in millimeters), and longer lifespan, etc.

In some embodiments, the ambient-powered IoT is a promising technology that may meet the unmet needs mentioned above. The ambient-powered IoT devices are IoT devices that are powered through energy collection, which have no batteries or limited energy storage capacity (e.g., using capacitors), may provide energy by collecting radio waves, light, motion, heat, or any other suitable power sources.

In some embodiments, the energy collected from ambiance may drive data transmission and wireless communication of a sensing node. The current mainstream low power consumption IoT communication chips (e.g., Bluetooth Low Energy (BLE), LoRa, NB-IoT) consume tens or even hundreds of milliwatts of power for transmission and reception, while ambient energy collected yields only microwatts, insufficient to power these types of nodes. Therefore, a new wireless communication technology is needed to reduce the communication power consumption to tens or even below ten microwatts. Currently, the mainstream approach is to use Backscatter Communication technology. The Backscatter Communication is one of key technologies for building a green, energy-efficient, low-cost, and flexibly deployable future IoT, and is an important means of realizing "Internet of Everything".

In some embodiments, as shown in FIG. 1B, the Backscatter Communication utilizes the principle of the backscattering of radio frequency signals to design an extremely low-power modulation and transmission technology. The Backscatter Communication is first proposed by Stockman, and works by reflecting a portion of the radio frequency signal as the radio frequency signal reaches the surface of an object. A transmitting node adjusts the matching between the receiving antenna and impedance according to the information to be transmitted, enhancing the reflection of an incident radio frequency signal and modulating its acquired sensing data onto a reflected signal to complete data transmission. This process is similar to a reflector. Compared to other communication technologies, the Backscatter Communication does not require complex radio frequency structures, reducing the use of power amplifiers, high-precision crystal oscillators, duplexers, high-precision filters, and other components. The Backscatter Communication also does not require complex baseband processing, and thus simplifying terminal design and significantly reducing terminal node costs.

In some embodiments, the Backscatter Communication has been widely applied in Radio Frequency Identification (RIFD) systems, resulting in many large-scale commercial applications. The working principle is that the receiver (usually an RFID reader) sends a radio frequency excitation signal to activate a passive node (usually an RFID electronic tag). The electronic tag uses the Backscatter Communication to modulate its own information onto the radio frequency signal. The reader receives the reflected signal from the passive electronic tag and demodulates the reflected signal to achieve the information transmission.

In some embodiments, the RFID technology also has many drawbacks, such as short coverage distance (the wireless signal experiences double path fading during the communication, resulting in the high path loss and the short effective communication distance), single-channel transmission, the need for strict tag alignment, and the lack of power control, etc. The RFID technology has significant room for improvement in communication. There is need for integrating 3GPP communication technology to improve the wireless communication performance of RFID technology in the passive IoT.

The new type of IoT device needs to have capabilities of low memory, low processing capability, low power, small data transmission, and mass deployment, etc. The ambient IoT device should be maintenance-free and has a long service life (e.g., over 10 years).

The new type of IoT device needs to collect radio waves transmitted by network nodes to obtain energy before it may drive itself and operate. Therefore, before obtaining the energy, the IoT device is usually in a "shutdown" state, i.e., offline state. Therefore, the communication system needs to support data communication modes with shorter transmission times, lower memory consumption, and more convenient terminal management to complete the data communication process as quickly as possible.

In some embodiments, a network topology architecture for wireless communication across ambient energy-based devices is implemented using the backscatter technology. For example, the network topology construction may include one of the following.

Topology 1: referring to FIG. 1C, downlink (DL) and uplink (UL) data are directly received and transmitted between ambient IoT devices supporting the ambient power and base stations.

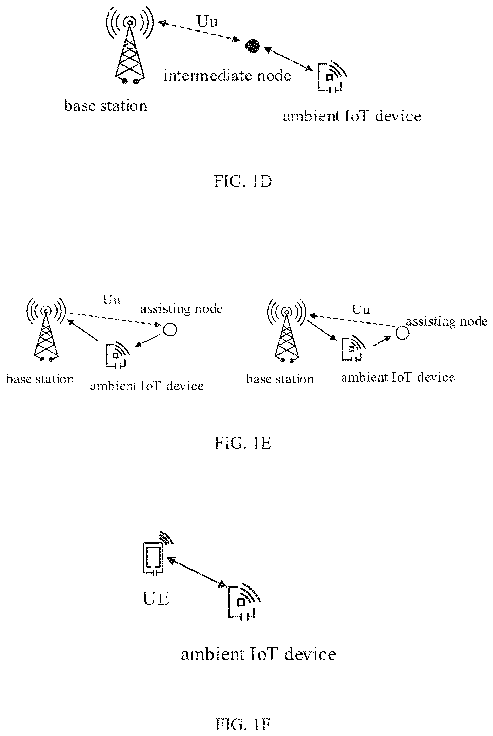

Topology 2: referring to FIG. 1D, DL and UL data are indirectly received and transmitted between ambient IoT devices and base stations, an intermediate node, such as a relay, an Integrated Access Backhaul (IAB), a user equipment (UE), and/or a repeater, is located between them, and acts as a forwarder.

Topology 3: referring to FIG. 1E, DL or UL data is directly received or transmitted between ambient IoT devices and base stations, and an assisting node, such as a relay, an IAB, a UE, and/or a repeater, is located at the UL or the DL, which is responsible for receiving or transmitting UL data or receiving DL data.

Topology 4: referring to FIG. 1F, DL and UL data are directly received and transmitted between ambient IoT devices and UEs, the UE is responsible for collecting data and forwarding the collected data to the network side.

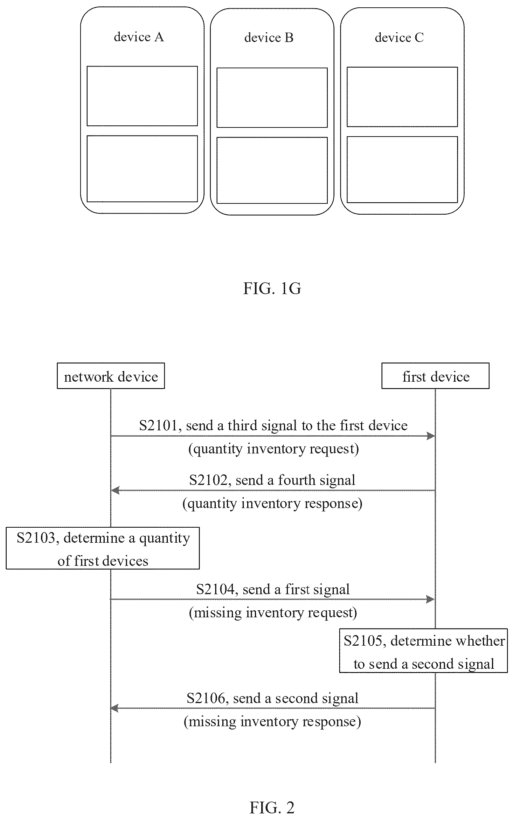

In some embodiments, as shown in FIG. 1G, the ambient IoT devices may be divided into three types.

Device A: the device does not have energy storage, independent signal generation or amplification, i.e., the device uses backscatter transmission.

Device B: the device has energy storage, but does not have independent signal generation, i.e., the device uses backscatter transmission. The use of stored energy may include amplification of reflected signals.

Device C: the device has energy storage and independent signal generation, i.e., the device has active radio frequency (RF) components for transmission.

In some embodiments, the network side is configured to trigger a mobile terminal (MT) or the terminal is configured to trigger a Mobile Origination (MO) call, regardless of which case, the network and the terminal first establish a dedicated connection, and the data interaction only occurs after the Access Stratum is safely activated. Optionally, in Multicast & Broadcast Service (MBS), the network side may trigger users within an MBS group to enter the Radio Resource Control (RRC) connection state via group paging, and then multicast data is issued. Users within the group are all legitimate users maintained by Non-access stratum (NAS) signaling.

In some embodiments, there is a scenario where the network side does not trigger a group of users, and this group of users is unknown to the network side.

In some embodiments, the network side is configured to trigger a data request based on a group of ambient IoT (for example, based on service ID). However, the cell does not know whether some ambient IoT are missing; for instance, due to being out of coverage, poor channel conditions, or insufficient power. Therefore, how to handle missing ambient IoT and what the next step should be for the network after one inventory attempt is a key issue. For example, after one inventory attempt, whether to trigger the data request again.

The embodiments of the present disclosure may first perform a quantity inventory for passive IoT terminals (such as ambient IoT), and then perform inventory for each ambient IoT. This may minimize the problem of missing inventory. Optionally, if missing inventory is detected, the network side may trigger the inventory command again, and the already inventoried terminals may ignore the current inventory, achieving the goals of energy-saving for the environmental physical network, reducing interference, and saving air interface resources.

FIG. 2 is an interactive schematic diagram of a method for processing information according to an embodiment of the present disclosure. As shown in FIG. 2, the method for processing information involved in the embodiments of the present disclosure is used for a system for processing information 100, where the method includes:
step S2101, the network device sends a third signal to the first device.

In some embodiments, the first device receives the third signal sent by the network device.

In some embodiments, the first device may be a terminal as described in previous embodiments.

In some embodiments, the first device may be an Internet of Things (IoT) device; for example, the first device may be an ambient IoT. Optionally, an ambient IoT may refer to an ambient IoT device.

In some embodiments, the network device includes at least one of the following: a base station, a relay, Integrated Access & Backhaul (IAB), a terminal, and a repeater.

In some embodiments, the network device may be referred to as a reader or a reading device; the first device may be referred to as a tag.

In some embodiments, the network device may be at least one of an auxiliary node or an intermediate node in previous embodiments.

In some embodiments, the third signal is configured to trigger the first device to send a fourth signal.

In some embodiments, the name of the third signal is not limited; it may be, for example, a trigger signal, an excitation signal, or a quantity inventory request.

In some embodiments, the third signal includes first sequence information.

Optionally, the first sequence information includes one of the following: the first sequence, or the first sequence index corresponding to the first sequence.

Optionally, the first sequence information may be any string.

In some embodiments, the third signal may also not include first sequence information; the third signal also is configured to trigger the first device to send a fourth signal. When the network device receives the fourth signal sent by the first device through backscatter, it determines to perform the quantity inventory on the first device.

In some embodiments, the third signal includes: third indication information, where the third indication information is configured to indicate performing a quantity inventory on the first device.

In some embodiments, the name of the third indication information is not limited; it may be, for example, quantity inventory purpose information.

In some embodiments, the third signal is carried in at least one of the following: an MAC header, an MAC payload, an MAC CE, or an RRC message.

Optionally, the network device sends an MAC to the first device, where the third signal is carried in the sub-header of the MAC, or the third signal is carried in the MAC payload of the MAC.

Optionally, the network device sends an MAC CE to the first device, where the MAC CE carries the third signal.

Optionally, the network device sends an RRC message to the first device, where the RRC message includes the third signal.

In some embodiments, the network device stores first information, where the first information is configured to indicate at least one of the following: at least one first sequence and at least one first sequence index; or a corresponding relationship between the first sequence and the first sequence index.

Step S2102, the first device sends a fourth signal to the network device.

In some embodiments, the network device receives the fourth signal sent by the first device.

In some embodiments, each of the first device and the network device may store the first information. Optionally, the first information also includes the corresponding relationship between the first sequence information and the second sequence information.

In some embodiments, the fourth signal determines a quantity of the first device. Optionally, the fourth signal is sent through backscatter.

In some embodiments, the first device sends the fourth signal based on the third signal.

In some embodiments, the first device sends the fourth signal based on the measurement value of the reference signal measured by the first device being greater than or equal to the threshold value configured by the network device. Optionally, the measurement value of the reference signal may be a Reference Signal Receiving Power (RSRP), and the threshold value may be a RSRP threshold.

In some embodiments, the name of the fourth signal is not limited; it may be, for example, a backscatter signal or a quantity inventory response.

In some embodiments, the fourth signal includes second sequence information.

Optionally, the second sequence information includes at least one of the following: a second sequence corresponding to the first sequence, a second sequence corresponding to the first sequence index, a default second sequence index, a third sequence index configured by the network device, a third sequence configured by the network device, a fourth sequence pre-configured by the first device, and a fifth sequence; the fifth sequence is determined by the first device based on the first sequence and/or an identification of the first device through cyclic shifting.

For example, the fifth sequence is determined by the first device based on the third sequence and the identification of the first device through cyclic shifting.

For example, the fifth sequence is determined by the first device based on the fourth sequence and the identification of the first device through cyclic shifting.

For example, the first device acquires the first sequence configured by the network device based on the third signal and determines the second sequence corresponding to the first sequence. The first device sends the fourth signal, including the second sequence, to the network device.

For example, the first device acquires the first sequence index configured by the network device based on the third signal; the first device determines the second sequence corresponding to the first sequence index based on the first sequence index; and sends the fourth signal, including the second sequence, to the network device.

For example, after receiving the third signal, the first device determines the second sequence corresponding to the second sequence index based on the default second sequence index; the first device sends the fourth signal, including the second sequence scheduling, to the network device.

For example, the first device sends a fourth signal, including the third sequence index and/or the third sequence, to the network device based on the third sequence index and/or the third sequence pre-configured by the network device for the first device.

For example, the fifth sequence is determined by the first device based on the first sequence and the identification of the first device through cyclic shifting; for example, the fifth sequence is determined by the first device based on the identification of the first device through cyclically shifting the first sequence. For example, the first sequence is "001"; if the identification of the first device is "0001", the fifth sequence acquired by the first device may be "010"; if the identification of the first device is "0010", the fifth sequence acquired by the first device may be "011"; and so on. If the identification of the first device is "0110", the fifth sequence acquired by the first device is "111"; if the identification of the first device is "0111", the fifth sequence acquired by the first device is "000".

Optionally, the second sequence information may be any string.

In some embodiments, the first device determines the second sequence information based on the first sequence information and the first information.

In some embodiments, the fourth signal may also not include second sequence information. After the first device receives the third signal, the first device sends the fourth signal which does not include the second sequence information; the fourth signal may also be used for the network device to perform the quantity inventory on the first device.

Step S2103, the network device determines a quantity of first devices.

In some embodiments, the network device determines the quantity of the first device based on the fourth signal. Optionally, the network device receives the fourth signal sent by the at least one first device and determines the quantity of at least one first device; for example, if the at least one first device is 10 devices, the quantity of the first device may be determined to be 10.

Step S2104, the network device sends the first signal to the first device.

In some embodiments, the first device receives the first signal sent by the network device.

In some embodiments, the first signal is used by the first device to determine whether to send a second signal.

In some embodiments, the name of the first signal is not limited; it may be, for example, a trigger signal, an excitation signal, or missing inventory request.

In some embodiments, the first signal includes: first indication information, where the first indication information is configured to indicate performing missing inventory on the first device. Optionally, missing inventory, i.e., missing inventory.

In some embodiments, the name of the first indication information is not limited; it may be, for example, member inventory purpose information, missing inventory purpose information, or missing inventory indication information, etc.

In some embodiments, the first signal also includes at least one of the following:
a task identifier (task id), where the task identifier is configured to identify the inventory task; or
an inventory value tag (inventory value tag), where the inventory value tag is configured to indicate whether the current inventory is a repeatedly-triggered inventory task.

Optionally, the task identifier is used by the first device to determine whether the inventory task is a repeatedly-triggered inventory task. For example, if the task identifier in the first signal is the same as the identifier of the most recent inventory task, it is determined that the current inventory is the repeatedly-triggered inventory task; or, if the task identifier in the first signal is different from the identifier of the most recent inventory task, it is determined that the current inventory is the repeatedly-triggered inventory task.

Optionally, the inventory task that is the repeatedly-triggered inventory task is a re-triggered inventory task.

Optionally, the inventory value tag remains unchanged, which is configured to indicate that the current inventory is a repeatedly-triggered inventory task; or, the inventory value tag increases by a first value, which is configured to indicate that the current inventory is a re-triggered inventory task; the first value is an integer greater than 0. For example, the first value is 1.

Optionally, the inventory value tag is a second value, which is configured to indicate that the current inventory is the repeatedly-triggered inventory task; or, the inventory value tag is a third value, which is configured to indicate that the current inventory is a re-triggered inventory task. For example, the second value and third value may each be one or a plurality of bits.

In some embodiments, the first signal includes at least one of the following:
a time threshold value;
first time information, used to indicate the first time of the current inventory;
second time information, used to indicate the second time of the most recent inventory;
second indication information, where the second indication information is configured to indicate information of the first device performing the missing inventory;
a service group identifier (service group id), where the service group identifier is configured to indicate a group to which an inventory task belongs; or
a device group identifier, where the device group identifier is configured to indicate the group to which the first device belongs.

Optionally, the device group identifier may be an ambient IoT group identifier (ambient IoT group).

Optionally, the time threshold value is used by the first device to determine whether to send a second signal.

Optionally, the time threshold value is preset based on a protocol preset or configured based on the network device. For example, the time threshold value is agreed based on a communication protocol or agreed based on agreement between the network device and the first device.

Optionally, the first time information is used by the first device to determine whether to send a second signal.

Optionally, the second time information is used by the first device to determine whether to send a second signal.

In some embodiments, the first signal is carried in at least one of the following: an MAC header, an MAC payload, an MAC CE, or an RRC message.

Optionally, the network device sends an MAC to the first device, where the first signal is carried in the sub-header of the MAC, or the first signal is carried in the MAC payload of the MAC.

Optionally, the network device sends an MAC CE to the first device, where the MAC CE carries the first signal.

Optionally, the network device sends an RRC message to the first device, where the RRC message includes the first signal.

Step S2105, the first device determines whether to send a second signal.

In some embodiments, the first device determines whether to send a second signal based on the first signal. Optionally, the first device determines that the current inventory is a repeatedly-triggered inventory task based on the first signal, and determines not to send the second signal; or, the first device determines that the current inventory is a re-triggered inventory task based on the first signal, and determines to send the second signal.

In some embodiments, the second signal determines whether the first device is missing inventory device.

In some embodiments, the name of the second signal is not limited; it may be, for example, a backscatter signal, or a missing inventory response.

In some embodiments, the second signal may include data from the first device and/or data from a sensor bound to or related to the first device. Optionally, the second signal may carry data such as temperature, humidity, oxygen concentration, and/or noise level.

In some embodiments, the first device determines that the current inventory is a repeatedly-triggered inventory task based on at least one of the task identifier or the inventory value tag, and determines not to send the second signal. Optionally, the first device determines that the inventory task identified by the task identifier is a repeatedly-triggered inventory task, and determines not to send the second signal. Optionally, the first device determines that the current inventory is a repeatedly-triggered inventory task based on the inventory value tag, and determines not to send the second signal.

In some embodiments, the first device determines that the current inventory is a re-triggered inventory task based on at least one of the task identifier or the inventory value tag, and determines to send the second signal. Optionally, the first device determines that the inventory task identified by the task identifier is a re-triggered inventory task, and determines to send the second signal. Optionally, the first device determines that the current inventory is a re-triggered inventory task based on the inventory value tag, and determines to send the second signal.

In some embodiments, the first device determines to send the second signal based on the difference between the fourth time and the third time being greater than or equal to the time threshold value; or, the first device determines not to send the second signal based on the difference between the fourth time and the third time being less than the time threshold value.

Optionally, the third time is a time after the first device completes the most recent inventory task, and the fourth time is a time when the first device completes the most recent inventory task and powers off, then powers on again.

Optionally, the third time is a time when the first device receives the first signal, and the fourth time is a time when the first device receives the third signal.

In some embodiments, the first device determines not to send the second signal based on a fifth time of the most recent inventory recorded by the first device being the same as the second time. Optionally, the second time is the time of the most recent inventory.

In some embodiments, the first device determines not to send the second signal based on the fifth time of the most recent inventory recorded by the first device being different from the first time. Optionally, the first time is the time of the current inventory.

In some embodiments, the first device determines to send the second signal based on the fifth time of the most recent inventory recorded by the first device being different from the second time.

Step S2106, the first device sends a second signal to the network device.

In some embodiments, the network device receives the second signal sent by the first device.

In some embodiments, the first device determines that the current inventory is a re-triggered inventory task based on the first signal and determines to send the second signal.

In some embodiments, the first device sends the third signal and/or the fifth signal; the third signal includes at least one of the task identifier or inventory value tag; the fifth signal includes at least one of time threshold value, first time information, or second time information.

In some embodiments, "acquire", "obtain", "get", "receive", "transmit", and "send and/or receive" may be interchangeable with each other, which may be interpreted as receiving from another entity, obtaining from protocols, obtaining from self-processing, autonomous implementation, and other meanings.

In some embodiments, terms such as "send", "emit", "report", "issue", "transmit", "bidirectional transmission", "send and/or receive" may be interchangeable with each other.

In some embodiments, terms such as "specific", "predetermined", "preset", "set", "indicated", "certain", "any", "first", etc. may be interchangeable with each other. Terms such as "specific A", "predetermined A", "preset A", "set A", "indicated A", "a certain A", "any A", "first A" may be interpreted as A predetermined in the protocol or obtained through setting, configuration, or indication, or interpreted as a specific A, a certain A, any A, or the first A, etc., but not limited to this.

In some embodiments, the determination or judgment may be performed using a value represented by one bit (0 or 1), or by a true/false value (Boolean value), or by a numerical comparison (e.g., a comparison with a predetermined value), but are not limited to this.

In some embodiments, "not expecting to receive" may be interpreted as not receiving over time-domain resources and/or frequency-domain resources, or interpreted as not performing subsequent processing on the received data, etc., and "not expecting to send" may be interpreted as not sending, or interpreted as sent but not expecting a response from the receiver.

The method for processing information according to the embodiments of the present disclosure may include at least one of steps S2101 to S2106. For example, step S2104 may be implemented as an independent embodiment; the combination of step S2104 and step S2105 may be implemented as an independent embodiment; the combination of step S2104, step S2105, and step S2106 may be implemented as an independent embodiment; the combination of step S2101 and step S2102 may be implemented as an independent embodiment; the combination of step S2101, step S2102, and step S2103 may be implemented as an independent embodiment; the combination of steps S2101 to S2106 may be implemented as an independent embodiment.

In some embodiments, step S2104, step S2105, and step S2106 may be optional, and in different embodiments, one or more of these steps may be omitted or replaced.

In some embodiments, step S2101, step S2102, and step S2103 may be optional, and in different embodiments, one or more of these steps may be omitted or replaced.

In some embodiments, other optional implementations described before or after the corresponding section in FIG. 2 may be referenced.

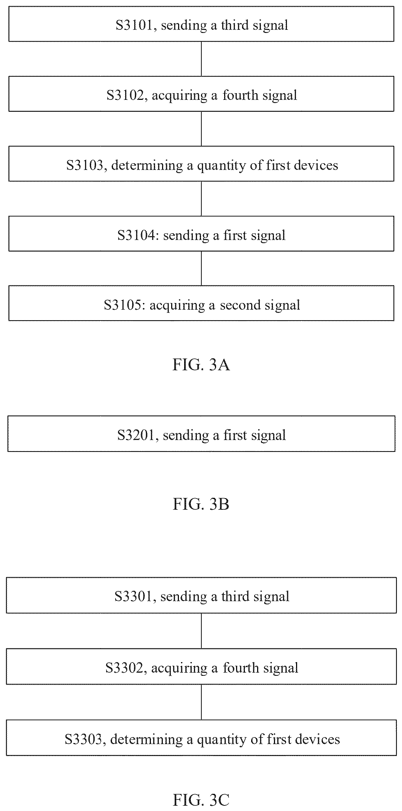

FIG. 3A is a flowchart illustrating a method for processing information according to an embodiment of the present disclosure. As shown in FIG. 3A, the method for processing information related to the embodiments of the present disclosure is performed by a network device, and the method includes:
Step S3101, a third signal is sent.

The optional implementation of step S3101 may refer to the optional implementation of step S2101 in FIG. 2, and other related parts in the embodiments associated with FIG. 2, which will not be repeated here.

In some embodiments, the network device sends the third signal to the first device, but is not limited to this, and the network device may also send the third signal to another entity.

Step S3102, a fourth signal is acquired.

The optional implementation of step S3102 may refer to the optional implementation of step S2102 in FIG. 2, and other related parts in the embodiments associated with FIG. 2, which will not be repeated here.

In some embodiments, the network device receives the fourth signal sent by the first device, but is not limited to this, and may also receive the fourth signal sent by another entity.

In some embodiments, the network device acquires the fourth signal as specified by a protocol.

In some embodiments, the network device acquires the fourth signal from an upper layer(s).

In some embodiments, the network device processes to obtain the fourth signal.

In some embodiments, step S3102 is omitted, and the network device autonomously implements the function indicated by the fourth signal, or the function is set as initial or default.

Step S3103, a quantity of first devices is determined.

The optional implementation of step S3103 may refer to the optional implementation of step S2103 in FIG. 2 and other related parts in the embodiments associated with FIG. 2, which will not be repeated here.

Step S3104: a first signal is sent.

The optional implementation of step S3104 may refer to the optional implementation of step S2104 in FIG. 2 and other related parts in the embodiments associated with FIG. 2, which will not be repeated here.

In some embodiments, the network device sends the first signal to the first device, but this is not limited to this; the first signal may also be sent to another entity.

In some embodiments, the first signal may be a single first signal; the first signal includes at least one of a task identifier or an inventory value tag, and/or the first signal includes at least one of a time threshold value, first time information, or second time information. Optionally, the first signal may also include at least one of second indication information, a service group identifier, and a device group identifier.

In some embodiments, the first signal may be two first signals; the first one of the first signals includes at least one of a task identifier or an inventory value tag; the second one of the first signals includes at least one of a time threshold value, first time information, or second time information. Optionally, both the first one and the second one of the first signals may also include at least one of second indication information, a service group identifier, or a device group identifier. Optionally, the first one of the first signals and the second one of the first signals may swap order or be performed simultaneously.

Step S3105: a second signal is acquired

The optional implementation of step S3105 may refer to the optional implementation of step S2106 in FIG. 2 and other related parts in the embodiments associated with FIG. 2, which will not be repeated here.

In some embodiments, the network device receives the second signal sent by the first device, but this is not limited to this; the second signal may also be received from another entity.

In some embodiments, the network device acquires the second signal as specified by a protocol.

In some embodiments, the network device acquires the second signal from an upper layer(s).

In some embodiments, the network device processes to obtain the second signal.

In some embodiments, step S3105 is omitted, and the network device autonomously implements the function indicated by the second signal, or the function is set as initial or default.

The method for processing information related to the embodiments of the present disclosure may include at least one of steps S3101 to S3105. For example, step S3104 may be implemented as an independent embodiment; a combination of step S3104 and step S3105 may be implemented as an independent embodiment; a combination of step S3101 and step S3102 may be implemented as an independent embodiment; a combination of step S3101, step S3102, and step S3103 may be implemented as an independent embodiment; a combination of steps S3101 to S3105 may be implemented as an independent embodiment.

In some embodiments, step S3104 and step S3105 may be optional, and in different embodiments, one or more of these steps may be omitted or replaced.

In some embodiments, step S3101, step S3102, and step S3103 may be optional, and in different embodiments, one or more of these steps may be omitted or replaced.

FIG. 3B is a flowchart illustrating a method for processing information according to an embodiment of the present disclosure. As shown in FIG. 3B, the method for processing information related to the present disclosure is performed by a network device, and the method includes:

Step S3201, a first signal is sent.

The optional implementation of step S3201 may refer to the optional implementation of step S2104 in FIG. 2, or the optional implementation of step S3104 in FIG. 3A, and other related parts in the embodiments associated with FIG. 2 and FIG. 3A, which will not be repeated here.

Optionally, the first signal includes first indication information, where the first indication information is configured to indicate performing missing inventory on the first device; the first signal is used by the first device to determine whether to send the second signal.

In some embodiments, the network device receives the second signal sent by the first device.

In some embodiments, the first signal also includes at least one of the following:
a task identifier, where the task identifier is configured to identify the inventory task; or
an inventory value tag, where the inventory value tag is configured to indicate whether the current inventory is a repeatedly-triggered inventory task.

In some embodiments, the inventory value tag remains unchanged, configured to indicate that the current inventory is the repeatedly-triggered inventory task; or, the inventory value tag increases by a first value, configured to indicate that the current inventory is a re-triggered inventory task; the first value is an integer greater than 0;
or, the inventory value tag is a second value, configured to indicate that the current inventory is the repeatedly-triggered inventory task; or, the inventory value tag is a third value, configured to indicate that the current inventory is a re-triggered inventory task.

In some embodiments, the first signal includes at least one of the following:
a time threshold value;
first time information, used to indicate a first time of the current inventory; or
second time information, used to indicate a second time of the most recent inventory.

In some embodiments, the first signal also includes at least one of the following:
second indication information, where the second indication information is configured to indicate information of the first device performing the missing inventory;
a service group identifier, where the service group identifier is configured to indicate the group to which an inventory task belongs;

Device group identifier, where the device group identifier is configured to indicate the group to which the first device belongs.

In some embodiments, the first signal is carried in at least one of the following: an MAC header, an MAC payload, an MAC CE, or an RRC message.

In some embodiments, before sending the first signal, the method further includes:
sending a third signal, where the third signal is configured to trigger the first device to send a fourth signal; and
based on the received fourth signal, determine a quantity of first devices.

In some embodiments, the third signal includes first sequence information; and/or, the fourth signal includes second sequence information.

In some embodiments, the first sequence information includes at least one of the following: the first sequence, or the first sequence index corresponding to the first sequence; and/or, the second sequence information includes at least one of the following: the second sequence corresponding to the first sequence, the second sequence corresponding to the first sequence index, the default second sequence index, the third sequence index configured by the network device, the third sequence configured by the network device, the fourth sequence pre-configured by the first device, or the fifth sequence; the fifth sequence is determined by the first device based on the first sequence and/or an identification of the first device through cyclic shifting.

In some embodiments, the method includes: storing first information, where the first information is configured to indicate at least one of the following:
at least one first sequence and at least one first sequence index;
a corresponding relationship between the first sequence and the first sequence index; or
a corresponding relationship between the first sequence information and the second sequence information.

In some embodiments, the third signal further includes: third indication information, where the third indication information is configured to indicate performing a quantity inventory on the first device.

In some embodiments, the third signal is carried in at least one of the following: An MAC header, an MAC payload, an MAC CE, or an RRC message.

The above embodiments may be implemented individually or in combination, and optional implementations may refer to the optional implementations of the steps in FIG. 2 and FIG. 3A, which will not be repeated here.

FIG. 3C is a flowchart illustrating a method for processing information according to an embodiment of the present disclosure. As shown in FIG. 3C, the method for processing information related to the embodiments of the present disclosure is performed by a network device, and the method includes:

Step S3301, a third signal is sent.

The optional implementation of step S3301 may refer to the optional implementation of step S2101 in FIG. 2, or the optional implementation of step S3101 in FIG. 3A, and other related parts in the embodiments associated with FIG. 2 and FIG. 3A, which will not be repeated here.

Step S3302, a fourth signal is acquired.

The optional implementation of step S3302 may refer to the optional implementation of step S2102 in FIG. 2, or the optional implementation of step S3102 in FIG. 3A, and other related parts in the embodiments associated with FIG. 2 and FIG. 3A, which will not be repeated here.

Step S3303, a quantity of first devices is determined.

The optional implementation of step S3303 may refer to the optional implementation of step S2103 in FIG. 2, or the optional implementation of step S3103 in FIG. 3A, and other related parts in the embodiments associated with FIG. 2 and FIG. 3A, which will not be repeated here.

The above embodiments may be implemented individually or in combination, and optional implementations may refer to the optional implementations of the steps in FIG. 2 and FIG. 3A, which will not be repeated here.

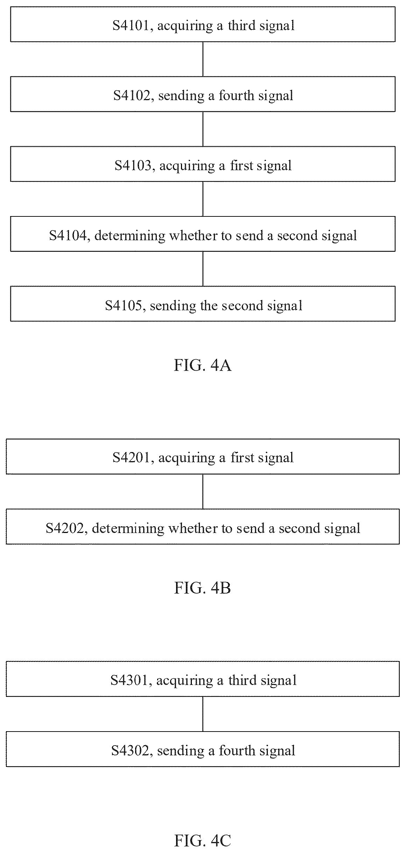

FIG. 4A is a flowchart illustrating a method for processing information according to an embodiment of the present disclosure. As shown in FIG. 4A, the method for processing information related to the embodiments of the present disclosure is performed by a first device, and the method includes:

Step S4101, a third signal is acquired.

The optional implementation of step S4101 may refer to the optional implementation of step S2101 in FIG. 2, and other related parts in the embodiments associated with FIG. 2, which will not be repeated here.

In some embodiments, the first device receives the third signal sent by the first device, but is not limited to this, and may also receive the third signal sent by another entity.

In some embodiments, the first device acquires the third signal as specified by a protocol.

In some embodiments, the first device acquires the third signal from an upper layer(s).

In some embodiments, the first device processes to obtain the third signal.

In some embodiments, step S4101 is omitted, and the first device autonomously implements the function indicated by the third signal, or the function is set as initial or default.

Step S4102, a fourth signal is sent.

The optional implementation of step S4102 may refer to the optional implementation of step S2102 in FIG. 2, and other related parts in the embodiments associated with FIG. 2, which will not be repeated here.

In some embodiments, the first device sends the fourth signal to the network device, but is not limited to this, and may also send the fourth signal to another entity.

Step S4103, a first signal is acquired.

The optional implementation of step S4103 may refer to the optional implementation of step S2104 in FIG. 2, and other related parts in the embodiments associated with FIG. 2, which will not be repeated here.

In some embodiments, the first device receives the first signal sent by the network device, but is not limited to this, and may also receive the first signal sent by another entity.

In some embodiments, the first device acquires the first signal as specified by a protocol.

In some embodiments, the first device acquires the first signal from an upper layer(s).

In some embodiments, the first device processes to obtain the first signal.

In some embodiments, step S4103 is omitted, and the first device autonomously implements the function indicated by the first signal, or the function is set as initial or default.

Step S4104, it is determined whether to send a second signal.

The optional implementation of step S4104 may refer to the optional implementation of step S2105 in FIG. 2, and other related parts in the embodiments associated with FIG. 2, which will not be repeated here.

Step S4105, the second signal is sent.

The optional implementation of step S4105 may refer to the optional implementation of step S2106 in FIG. 2, and other related parts in the embodiments associated with FIG. 2, which will not be repeated here.

In some embodiments, the first device sends the second signal to the network device, but is not limited to this, and may also send the second signal to another entity.

The method for processing information according to the embodiments of the present disclosure may include at least one of steps S4101 to S4105. For example, step S4103 may be implemented as an independent embodiment; the combination of step S4103 and step S4104 may be implemented as an independent embodiment; the combination of step S4103, step S4104, and step S4105 may be implemented as an independent embodiment; the combination of step S4101 and step S4102 may be implemented as an independent embodiment; the combination of steps S4101 to S4105 may be implemented as an independent embodiment.

In some embodiments, step S4103, step S4104, and step S4105 may be optional, and in different embodiments, one or more of these steps may be omitted or replaced.

In some embodiments, step S4101 and step S4102 may be optional, and in different embodiments, one or more of these steps may be omitted or replaced.

FIG. 4B is a flowchart illustrating a method for processing information according to an embodiment of the present disclosure. As shown in FIG. 4B, the method for processing information related to the embodiments of the present disclosure is performed by the first device, and the method includes:

Step S4201, a first signal is acquired.

The optional implementation of step S4201 may refer to the optional implementation of step S2104 in FIG. 2, or the optional implementation of step S4103 in FIG. 4A, and other related parts in the embodiments associated with FIG. 2 and FIG. 4A, which will not be repeated here.

Step S4202, it is determined whether to send a second signal.

The optional implementation of step S4202 may refer to the optional implementation of step S2105 in FIG. 2, or the optional implementation of step S4104 in FIG. 4A, and other related parts in the embodiments associated with FIG. 2 and FIG. 4A, which will not be repeated here.

Optionally, the first signal includes first indication information, where the first indication information is configured to indicate performing missing inventory on the first device.

Optionally, determining whether to send the second signal includes: based on the first signal, determining whether to send the second signal.

In some embodiments, the first signal includes at least one of the following:
a task identifier, where the task identifier is configured to identify an inventory task; or
an inventory value tag, where the inventory value tag is configured to indicate whether a current inventory is a repeatedly-triggered inventory task.

In some embodiments, based on the first signal, determining whether to send the second signal includes one of the following:
based on at least one of the task identifier or inventory value tag, determining that the current inventory is a repeatedly-triggered inventory task, and determining not to send the second signal; or
based on at least one of the task identifier or inventory value tag, determining that the current inventory is a re-triggered inventory task, and determining to send the second signal.

In some embodiments, the first signal includes at least one of the following: a time threshold value; first time information, configured to indicate a first time of the current inventory; or second time information, configured to indicate a second time of the most recent inventory.

In some embodiments, based on the first signal, determining whether to send the second signal includes at least one of the following:
based on a difference between a fourth time and a third time being greater than or equal to the time threshold value, determining to send the second signal;
based on a difference between a fourth time and a third time being less than the time threshold value, determining not to send the second signal;
where the third time is a time after the first device completes the most recent inventory task, and the fourth time is a time when the first device completes the most recent inventory task and powers off, then powers on again; or, the third time is a time when the first device receives the first signal, and the fourth time is a time when the first device receives the third signal.

In some embodiments, based on the first signal, determining whether to send the second signal includes one of the following:
determining not to send the second signal based on a fifth time of the most recent inventory recorded by the first device being the same as the second time; or
determining not to send the second signal based on a fifth time of the most recent inventory recorded by the first device being different from the first time; or
determining to send the second signal based on a fifth time of the most recent inventory recorded by the first device being different from the second time.

In some embodiments, the first signal further includes one of the following:
second indication information, where the second indication information is configured to indicate information of the first device performing the missing inventory;
a service group identifier, where the service group identifier is configured to indicate a group to which an inventory task belongs; or
a device group identifier, where the device group identifier is configured to indicate a group to which the first device belongs.

In some embodiments, the first signal is carried in at least one of the following: An MAC header, an MAC payload, an MAC CE, or an RRC message.

In some embodiments, the method includes:
receiving a third signal; and
based on the third signal, sending a fourth signal; the fourth signal is used by the network device to determine a quantity of first devices.

In some embodiments, the third signal includes first sequence information; and/or, the fourth signal includes second sequence information.

In some embodiments, the first sequence information includes one of the following: a first sequence, or a first sequence index corresponding to a first sequence;
and/or, the second sequence information includes one of the following: the second sequence corresponding to the first sequence, the second sequence corresponding to the first sequence index, the default second sequence index, the third sequence index configured by the network device, the third sequence configured by the network device, the fourth sequence pre-configured by the first device, or the fifth sequence; the fifth sequence is determined by the first device based on the first sequence and/or an identification of the first device through cyclic shifting.

In some embodiments, the third signal further includes: third indication information, where the third indication information is configured to indicate performing a quantity inventory on the first device.

In some embodiments, sending the fourth signal includes: sending the fourth signal based on a measurement value of a reference signal measured by the first device being greater than or equal to a threshold value configured by the network device.

In some embodiments, the third signal is carried in at least one of the following: an MAC header, an MAC payload, an MAC CE, or an RRC message.

The above embodiments may be implemented individually or in combination, and the optional implementations may refer to the optional implementations of the steps in FIG. 2 and FIG. 4A, which will not be repeated here.

FIG. 4C is a flowchart illustrating a method for processing information according to an embodiment of the present disclosure. As shown in FIG. 4C, the method for processing information related to the embodiments of the present disclosure is performed by a first device, and the method includes:

Step S4301, a third signal is acquired.

The optional implementation of step S4301 may refer to the optional implementation of step S2101 in FIG. 2, or the optional implementation of step S4101 in FIG. 4A, and other related parts in the embodiments associated with FIG. 2 and FIG. 4A, which will not be repeated here.

Step S4302, a fourth signal is sent.

The optional implementation of step S4302 may refer to the optional implementation of step S2102 in FIG. 2, or the optional implementation of step S4102 in FIG. 4A, and other related parts in the embodiments associated with FIG. 2 and FIG. 4A, which will not be repeated here.

The above embodiments may be implemented individually or in combination, and the optional implementations may refer to the optional implementations of the steps in FIG. 2 and FIG. 4A, which will not be repeated here.

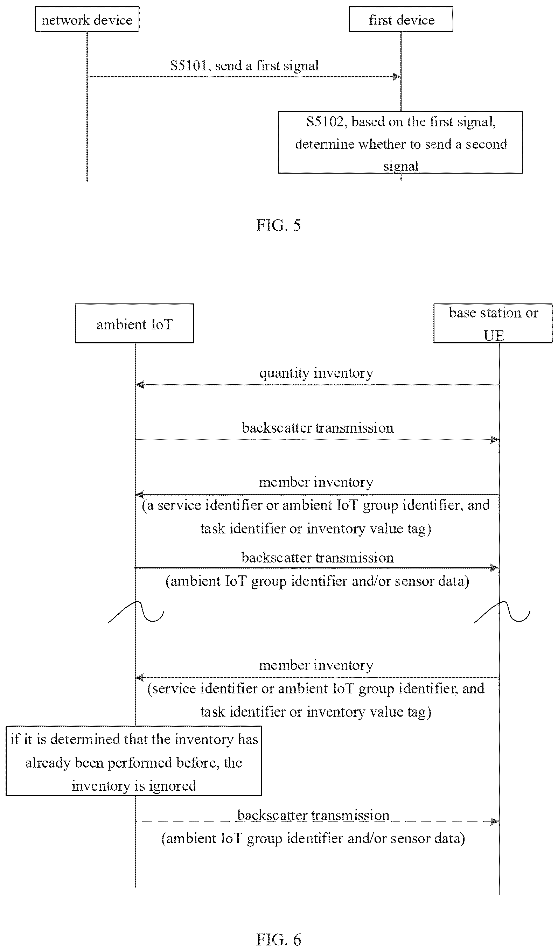

FIG. 5 is a flowchart illustrating a method for processing information according to an embodiment of the present disclosure. As shown in FIG. 5, the method for processing information related to the embodiments of the present disclosure is used for a communication system, and the method includes:

Step S5101, the network device sends a first signal to the first device.

Optionally, the first signal includes first indication information, where the first indication information is configured to indicate performing missing inventory on the first device; the first signal is used by the first device to determine whether to send a second signal.

The optional implementation of step S5101 may refer to the optional implementation of step S2104 in FIG. 2, step S3104 in FIG. 3A, step S4103 in FIG. 4A, and other related parts in the embodiments associated with FIG. 2, FIG. 3A, and FIG. 4A, which will not be repeated here.

Step S5102, based on the first signal, it is determined whether to send a second signal.

The optional implementation of step S5102 may refer to the optional implementation of step S2105 in FIG. 2, step S3105 in FIG. 3A, step S4104 in FIG. 4A, and other related parts in the embodiments associated with FIG. 2, FIG. 3A, and FIG. 4A, which will not be repeated here.

In some embodiments, the above method may include the embodiments of the method described on the system for processing information 100 side, the first device side, the network device side, etc., which will not be repeated here.

The embodiments of the present disclosure involve a method for processing information, and the method includes:
In the following embodiments, the base station may be replaced by a relay, an IAB, a UE, or a repeater. Optionally, the base station, the relay, IAB, the UE, or the repeater may be the network device in previous embodiments.

Step S6101, quantity inventory.

In some embodiments, the network side issues a request, and the purpose of this request is to trigger a quantity inventory; any ambient Internet of Things (Ambient IoT) that receives this request performs backscatter or determines whether to participate in the quantity inventory based on the RSRP threshold configured by the network side. Optionally, this request may also carry a sequence or sequence index, where the sequence is used by the terminal which carries the sequence when performing the backscatter, and the purpose is to assist the network side in calculating the quantity of terminals responding to this request.

In some embodiments, the ambient IoT performs backscatter to participate in the quantity inventory, and optionally, the ambient IoT performs backscattering at a maximum power. The backscatter manner may include at least one of the following:
manner 1: the ambient IoT performs the backscatter based on a sequence configured by a network side or a sequence corresponding to the sequence index;
manner 2: the ambient IoT performs cyclic shifting based on the default sequence index, or the sequence index configured by the network side, or the sequence configured by the network side, and/or the Ambient IoT identification, to determine the sequence used for backscattering
manner 3: the ambient IoT pre-configures a sequence, and this sequence is used for data sent via backscatter during the quantity inventory; or
manner 4: the ambient IoT does not load any data and directly backscatters the excitation signal from the network side.

In some embodiments, based on at least one of manner 1, manner 2, or manner 3, the network side knows the corresponding relationship between the sequence and the sequence index, and a set of sequences; for example, the system supports a total of 512 sequences for the quantity inventory.

In some embodiments, the network side determines the total quantity of ambient IoTs based on the backscatter from all ambient IoTs. That is, the quantity of the inventory.

In some embodiments, any information carried by the network side, such as: the purpose of the excitation signal, the quantity inventory, the sequence or the sequence index, etc., may be carried in the MAC header, or carried in the MAC payload, or carried in the MAC CE.

Optionally, the request issued by the network side may be the third signal in previous embodiments; the sequence and sequence index carried in the request may be the first sequence and first sequence index in previous embodiments; the backscatter performed by the ambient IoT may be the fourth signal in previous embodiments; the sequence carried during the backscatter performed by the ambient IoT may be the second sequence in previous embodiments; the purpose of the excitation signal may be the third indication information in previous embodiments.

Step S6102, based on auxiliary information from the network side, it is determined whether to participate in the inventory-based on the task identifier (task id) and a value tag.

In some embodiments, the network side issues a member inventory command, which includes following information, such as information such as the target member to be inventoried, such as service identifier (service id), a service group identifier (service group id), an ambient IoT group identifier, and so on. Optionally, it may also include a task identifier (task id) and/or an inventory value tag and/or indication information for missing inventory. Optionally, the service identifier is used to identify a task to be performed by the first device.

Optionally, the task identifier is a task serial number assigned by the network side for each inventory task; the inventory value tag represents a label of the current inventory task. If the current inventory task is triggered repeatedly, for example, if the missing inventory terminal is trigged to continue to report data, the inventory value tag remains unchanged; if the inventory task is re-performed, for example, a new inventory is performed, the inventory value tag increments by 1.

Optionally, if the ambient IoT receives the inventory task for the first time, it saves the task identifier and/or inventory value tag; based on the task identifier and/or inventory value tag, the ambient IoT determines whether the command is the missing inventory command repeatedly triggered by the terminal, if it is, and the ambient IoT has already completed the inventory, the inventory command is ignored; otherwise, the ambient IoT responds to the inventory command, performs the backscatter, and reports data.

For example, as shown in FIG. 6, the base station or UE (gNB/UE) issues a quantity inventory command to the ambient IoT (Ambient IOT); the ambient IoT performs the backscatter transmission on the base station or UE; the base station or UE issues a member inventory command, which includes a service identifier or ambient IoT group identifier, and task identifier or inventory value tag; the ambient IoT performs the backscatter transmission on the base station or UE, and the backscatter transmission includes the ambient IoT group identifier and/or sensor data; the base station or UE issues a member inventory command, which includes service identifier or ambient IoT group identifier, and task identifier or inventory value tag; if the ambient IoT determines that the inventory has already been performed before, the inventory is ignored; or, if the ambient IoT determines that the inventory has not been performed before, the ambient IoT performs the backscatter transmission on the base station or UE, and the backscatter transmission includes the ambient IoT group identifier and/or sensor data.

In some embodiments, any information carried by the network side, such as the task identifier, the member inventory purpose, the inventory value tag, the information of the target member to be inventoried, and/or indication information for the missing inventory, may be carried in the MAC header, the MAC payload, or the MAC CE

Optionally, the member inventory command sent by the network side may be the first signal in previous embodiments; the ambient IoT group identifier may be the device group identifier in previous embodiments; the indication information for the missing inventory may be the first indication information in previous embodiments; the information of the target member to be inventoried may be the second indication information in previous embodiments.

Step S6103, based on auxiliary information from the network side, it is determined whether to participate in the inventory-based on time.

Manner 1: After the ambient IoT completes a first inventory, the ambient IoT records the elapsed time; if the ambient IoT loses power, it stores this elapsed time and continues recording the elapsed time when powered on again. If the elapsed time does not exceed the threshold, the ambient IoT ignores the repeat inventory, otherwise, responds to the inventory. The threshold depends on the network side configuration or protocol agreement.

Manner 2: The network side is configured to indicate time information of the current inventory and time information of the most recent inventory; after the ambient IoT completes an inventory, it records the time information, if the inventory time recorded by the terminal is the same as the inventory time of the most recent inventory shown in the inventory command, meaning that the terminal task has already been inventoried, and the ambient IoT ignores the repeat inventory, otherwise, responds to the inventory.

Optionally, the time information of the current inventory may be the first time in previous embodiments, the time information of the most recent inventory may be the second time in previous embodiments, and the inventory time of the most recent inventory shown in the inventory command may be the fifth time in previous embodiments; the elapsed time recorded after the first inventory is completed may be the third time in previous embodiments, and the continued recording of the elapsed time upon power on may be the fourth time in previous embodiments.

The method for processing information involved in the present disclosure may include at least one of the steps S6101 to S6103. For example, step S6101 may be implemented as an independent embodiment; step S6102 may be implemented as an independent embodiment; step S6103 may be implemented as an independent embodiment; the combination of step S6101 and step S6102 may be implemented as an independent embodiment; the combination of step S6101 and step S6103 may be implemented as an independent embodiment; the combination of step S6102 and step S6103 may be implemented as an independent embodiment; the combination of step S6101, step S6102, and step S6103 may be implemented as an independent embodiment.

In some embodiments, steps S6101 and S6102 may optionally be omitted or replaced in different embodiments.

In some embodiments, steps S6101 and S6103 may optionally be omitted or replaced in different embodiments.

In some embodiments, steps S6102 and S6102 may optionally be omitted or replaced in different embodiments.

In embodiments of the present disclosure, some or all steps, and their optional implementations, can be arbitrarily combined with some or all steps in other embodiments, or arbitrarily combined with optional implementations in other embodiments.

Embodiments of the present disclosure also provide a device for implementing any of the above methods. For example, a device is provided, which includes units or modules for implementing the steps performed by the terminal in any of the above methods. In addition, another device is provided, including units or modules for implementing the steps performed by the network device (e.g., access network device, core network functional node, core network device, etc.) in any of the above methods.

It should be understood that the division of the units in the above device is only a logical functional division. In actual implementations, they may be fully or partially integrated into a single physical entity, or they may be physically separated. In addition, the units in the device may be implemented by a processor calling software. For example, the device includes a processor connected to a memory containing computer instructions. The processor calls the computer instructions stored in the memory to implement any of the above methods or to implement the functions of the units in the above device. The processor may be, for example, a general-purpose processor, such as a central processing unit (CPU) or a microprocessor, and the memory may be internal or external to the device. Alternatively, the units in the device may be implemented as hardware circuits. The functions of some or all units may be achieved through the design of these hardware circuits, which may be understood as one or more processors. For example, in one implementation, the hardware circuit is an application-specific integrated circuit (ASIC). The functions of some or all of the units are achieved through the design of the logical relationships between the components within the circuit. In another implementation, the hardware circuit may be implemented using a programmable logic device (PLD). Taking a Field Programmable Gate Array (FPGA) as an example, it may include a large number of logic gates. The connection relationships between the logic gates are configured through a configuration file, thereby achieving the functions of some or all of the units. All units of the above device may be implemented entirely through processor-called software, entirely through hardware circuits, or partially through processor-called software with the remaining parts implemented through hardware circuits.

In the present disclosure, the processor is a circuit with signal processing capabilities. In one implementation, the processor may be a circuit with instruction read and execute capabilities, such as a central processing unit (CPU), microprocessor, graphics processing unit (GPU) (which may be understood as a type of microprocessor), or digital signal processor (DSP). In another implementation, the processor may implement certain functions through the logical relationships of hardware circuits. These logical relationships are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit may be understood as the processor loading instructions to implement the functions of some or all of the above units. In addition, it may also be a hardware circuit designed for artificial intelligence, which may be understood as an ASIC, such as a neural network processing unit (NPU), tensor processing unit (TPU), or deep learning processing unit (DPU).

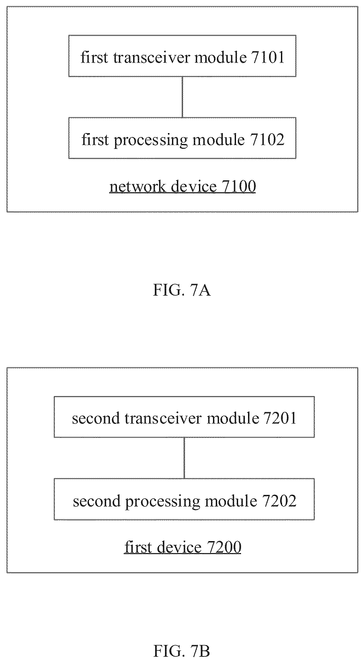

FIG. 7A is a schematic diagram of a structure of a network device according to embodiments of the present disclosure. As shown in FIG. 7A, the network device 7100 includes at least one of a first transceiver module 7101 or a first processing module 7102. In some embodiments, the first transceiver module 7101 is configured to send the first signal. In some embodiments, the first transceiver module 7101 is configured to perform at least one of sending and/or receiving steps (e.g., steps S2101, S2102, S2104 and/or S2106, but not limited to these) performed by the first device in any of the above methods, which will not be described in detail here. In some embodiments, the first processing module 7102 is configured to perform at least one of processing steps (e.g., step S2103, but not limited to this) performed by the network device in any of the above methods, which will not be described in detail here.

FIG. 7B is a schematic diagram of a structure of a network device according to embodiments of the present disclosure. As shown in FIG. 7B, the network device 7200 includes at least one of the second transceiver module 7201 or the second processing module 7202. In some embodiments, the second transceiver module 7201 is configured to receive the first signal; and the second processing module 7202 is configured to determine whether to send the second signal based on the first signal. Optionally, the second transceiver module 7201 is used to perform at least one of the sending and/or receiving steps in any of the methods above performed by the first device (e.g., steps S2101, S2102, S2104, and/or steps S2106, etc., but not limited to these), which will not be further described here. Optionally, the second processing module 7202 is configured to perform at least one of the processing steps performed by the network device in any of the methods above (e.g., step S2105, etc., but not limited to these), which will not be further described here.

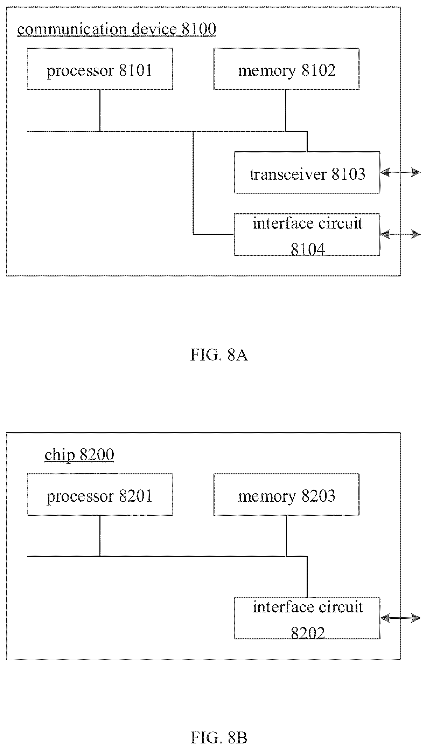

FIG. 8A is a schematic diagram of a structure of a communication device 8100 according to embodiments of the present disclosure. The communication device 8100 may be a network device (e.g., an access network device, a core network device, or a terminal, etc.), a first device (e.g., an ambient IoT device, or a terminal, etc.), a chip, a chip system, or a processor that supports the network device in implementing any of the above methods, or a chip, a chip system, or a processor that supports the terminal in implementing any of the above methods. The communication device 8100 may be configured to implement the methods described in the above method embodiments, and specific details may be found in the descriptions in the above method embodiments.

As shown in FIG. 8A, the communication device 8100 includes one or more processors 8101. The processor 8101 may be a general-purpose processor or an application-specific processor, such as a baseband processor or a central processing unit (CPU). The baseband processor may be used to process communication protocols and communication data, while the CPU may be used to control the communication device (e.g., base station, baseband chip, terminal device, terminal device chip, DU or CU, etc.), execute programs, and process program data. The processor 8101 is configured to call instructions to cause the communication device 8100 to perform any of the above methods.

In some embodiments, the communication device 8100 further includes one or more memories 8102 for storing instructions. In some embodiments, all or part of the memories 8102 may be located outside the communication device 8100.

In some embodiments, the communication device 8100 further includes one or more transceivers 8103. When the communication device 8100 includes one or more transceivers 8103, at least one of the communication steps such as transmitting and receiving in the above methods (e.g., at least one of steps S2101 to S2106, but not limited to this) are performed by the transceiver 8103, and at least one of other steps (e.g., at least one of steps S2101 to S2106, but not limited to this) are performed by the processor 8101.

In some embodiments, the transceiver may include a receiver and a transmitter, which may be separated or integrated. In some embodiments, terms such as "transceiver", "transceiver unit", "transceiver machine", "transceiver circuit", etc., may be used interchangeably. Terms such as "transmitter", "transmitting unit", "transmitting machine", "transmitting circuit", etc., may be used interchangeably. Terms such as "receiver", "receiving unit", "receiving machine", "receiving circuit", etc., may be used interchangeably.

In some embodiments, the communication device 8100 further includes one or more interface circuits 8104. The interface circuits 8104 are connected to the memory 8102 and may be used to receive signals from the memory 8102 or other devices, and to send signals to the memory 8102 or other devices. For example, the interface circuit 8104 may read instructions stored in the memory 8102 and send those instructions to the processor 8101.

The communication device 8100 described in the above embodiments may be a network device or a first device, but the scope of the communication device 8100 described in the present disclosure is not limited to this, and the structure of the communication device 8100 is not limited to FIG. 8A. The communication device may be a standalone device or part of a large device. For example, the communication device may be: (1) a standalone integrated circuit (IC), a chip, a chip system, or a subsystem; (2) a collection of one or more ICs, optionally, including storage components for storing data and programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc., and (6) other devices, etc.

FIG. 8B is a schematic diagram of a structure of a chip 8200 according to embodiments of the present disclosure. For cases where the communication device 8100 may be a chip or a chip system, the reference may be made to the schematic diagram of the structure of the chip 8200 shown in FIG. 8B, but it is not limited to this.

The chip 8200 includes one or more processors 8201, which are configured to perform any of the methods described above.

In some embodiments, the chip 8200 further includes one or more interface circuits 8202 connected to the memory 8203. The interface circuits 8202 may be used to receive signals from the memory 8203 or other devices, and may also be used to send signals to the memory 8203 or other devices. For example, the interface circuit 8202 may read instructions stored in the memory 8203 and send those instructions to the processor 8201.

In some embodiments, the interface circuit 8202 is configured to perform at least one of the communication steps such as transmitting and receiving in the above methods (e.g., at least one of steps S2101 to S2106, but not limited to this), and the processor 8201 is configured to perform at least one of other steps (e.g., at least one of steps S2101 to S2106, but not limited to this).

In some embodiments, terms such as "interface circuit", "interface", "transceiver pin", "transceiver", etc., may be used interchangeably.

In some embodiments, the chip 8200 further includes one or more memories 8203 for storing instructions. In some embodiments, all or part of the memories 8203 may be located outside the chip 8200.

The present disclosure also provides a storage medium storing instructions. When the instructions are executed on the communication device 8100, the communication device 8100 is caused to perform any of the above methods. In some embodiments, the storage medium is an electronic storage medium. In some embodiments, the storage medium is a computer-readable storage medium, but is not limited to this. The storage medium may also be a storage medium readable by other devices. In some embodiments, the above storage medium may be a non-transitory storage medium, but is not limited to this. The storage medium may also be a temporary storage medium.

The present disclosure also provides a program product. When the program product is executed by the communication device 8100, the communication device 8100 is caused to perform any of the above methods. In some embodiments, the above program product is a computer program product.

The present disclosure also provides a computer program. When the computer program runs on a computer, the computer is caused to perform any of the above methods.

## Claims

1. A method for processing information, comprising:
sending, by a network device, a first signal; wherein the first signal comprises first indication information, the first indication information is configured to indicate performing missing inventory on a first device; and the first signal is used by the first device to determine whether to send a second signal.

2. The method according to claim 1, wherein the first signal further comprises at least one of:
a task identifier, wherein the task identifier is configured to identify an inventory task; or
an inventory value tag, wherein the inventory value tag is configured to indicate whether a current inventory is a repeatedly-triggered inventory task.

3. The method according to claim 2, wherein
the inventory value tag remains unchanged, configured to indicate that the current inventory is the repeatedly-triggered inventory task; or, the inventory value tag increases by a first value, configured to indicate that the current inventory is a re-triggered inventory task; the first value is an integer greater than 0;
or
the inventory value tag is a second value, configured to indicate that the current inventory is the repeatedly-triggered inventory task; or, the inventory value tag is a third value, configured to indicate that the current inventory is a re-triggered inventory task.

4. The method according to any one of claims 1 to 3, wherein the first signal comprises at least one of:
a time threshold value;
first time information, configured to indicate a first time of a current inventory; or
second time information, configured to indicate a second time of a most recent inventory.

5. The method according to any one of claims 1 to 4, wherein the first signal further comprises one of:
second indication information, wherein the second indication information is configured to indicate information of the first device performing the missing inventory;
a service group identifier, wherein the service group identifier is configured to indicate a group to which an inventory task belongs; or
a device group identifier, wherein the device group identifier is configured to indicate a group to which the first device belongs.

6. The method according to any one of claims 1 to 5, wherein the first signal is carried in at least one of:
a Media Access Control MAC header;
a Media Access Control payload MAC payload;
a Media Access Control Control Element MAC CE; or
a Radio Resource Control RRC message.

7. The method according to any one of claims 1 to 6, before sending the first signal, further comprising:
sending a third signal, wherein the third signal is configured to trigger the first device to send a fourth signal; and
determining, based on the fourth signal received, a quantity of first devices.

8. The method according to claim 7, wherein the third signal comprises first sequence information; and/or, the fourth signal comprises second sequence information.

9. The method according to claim 8, wherein
the first sequence information comprises at least one of: a first sequence, or a first sequence index corresponding to a first sequence;
and/or
the second sequence information comprises at least one of: a second sequence corresponding to a first sequence, a second sequence corresponding to a first sequence index, a default second sequence index, a third sequence index configured by the network device, a third sequence configured by the network device, a fourth sequence pre-configured by the first device, or a fifth sequence; wherein the fifth sequence is determined by the first device based on the first sequence and/or an identification of the first device through cyclic shifting.

10. The method according to claim 8 or 9, further comprising:
storing first information, wherein the first information is configured to indicate at least one of:
at least one first sequence and at least one first sequence index;
a corresponding relationship between a first sequence and a first sequence index; or
a corresponding relationship between first sequence information and second sequence information.

11. The method according to any one of claims 8 to 10, wherein the third signal further comprises: third indication information, wherein the third indication information is configured to indicate performing a quantity inventory on the first device.

12. The method according to any one of claims 7 to 11, wherein the third signal is carried in at least one of:
an MAC header;
an MAC payload;
an MAC CE; or
an RRC message.

13. A method for processing information, comprising:
receiving, by a first device, a first signal; wherein the first signal comprises first indication information, and the first indication information is configured to indicate performing missing inventory on the first device; and
determining, based on the first signal, whether to send a second signal.

14. The method according to claim 13, wherein the first signal includes at least one of:
a task identifier, wherein the task identifier is configured to identify an inventory task; or
an inventory value tag, wherein the inventory value tag is configured to indicate whether a current inventory is a repeatedly-triggered inventory task.

15. The method according to claim 14, wherein determining whether to send the second signal based on the first signal comprises at least one of:
determining, based on at least one of the task identifier or the inventory value tag, that the current inventory is the repeatedly-triggered inventory task, and determining not to send the second signal; or
determining, based on at least one of the task identifier or the inventory value tag, that the current inventory is a re-triggered inventory task, and determining to send the second signal.

16. The method according to claim 15, wherein the first signal comprises at least one of:
a time threshold value;
first time information, configured to indicate a first time of the current inventory; or
second time information, configured to indicate a second time of a most recent inventory.

17. The method according to claim 16, wherein determining whether to send the second signal based on the first signal comprises one of:
determining to send the second signal based on a difference between a fourth time and a third time being greater than or equal to the time threshold value; or
determining not to send the second signal based on a difference between a fourth time and a third time being less than the time threshold value;
wherein the third time is a time after the first device completes a most recent inventory task, and the fourth time is a time when the first device completes the most recent inventory task and powers off, then powers on again; or, the third time is a time when the first device receives the first signal, and the fourth time is a time when the first device receives the third signal.

18. The method according to claim 17, wherein determining whether to send the second signal based on the first signal comprises one of:
determining not to send the second signal based on a fifth time of the most recent inventory recorded by the first device and the second time being identical; or
determining not to send the second signal based on a fifth time of the most recent inventory recorded by the first device being different from the first time; or
determining to send the second signal based on a fifth time of the most recent inventory recorded by the first device being different from the second time.

19. The method according to any one of claims 13 to 18, wherein the first signal further comprises one of:
second indication information, wherein the second indication information is configured to indicate information of the first device performing the missing inventory;
a service group identifier, wherein the service group identifier is configured to indicate a group to which an inventory task belongs; or
a device group identifier, wherein the device group identifier is configured to indicate a group to which the first device belongs.

20. The method according to any one of claims 13 to 19, wherein the first signal is carried in at least one of:
a Media Access Control MAC header;
a Media Access Control payload MAC payload;
a Media Access Control Control Element MAC CE; or
a Radio Resource Control RRC message.

21. The method according to any one of claims 13 to 20, further comprising:
receiving a third signal; and
sending a fourth signal based on the third signal; wherein the fourth signal is used by a network device to determine a quantity of first devices.

22. The method according to claim 21, wherein the third signal comprises first sequence information; and/or, the fourth signal comprises second sequence information.

23. The method according to claim 22, wherein
the first sequence information comprises at least one of: a first sequence, or a first sequence index corresponding to a first sequence;
and/or
the second sequence information comprises at least one of: a second sequence corresponding to a first sequence, a second sequence corresponding to a first sequence index, a default second sequence index, a third sequence index configured by the network device, a third sequence configured by the network device, a fourth sequence pre-configured by the first device, or a fifth sequence; wherein the fifth sequence is determined by the first device based on the first sequence and/or an identification of the first device through cyclic shifting.

24. The method according to any one of claims 21 to 23, wherein the third signal further comprises: third indication information, wherein the first indication information is configured to indicate performing a quantity inventory on the first device.

25. The method according to any one of claims 21 to 24, wherein sending the fourth signal comprises:
sending the fourth signal based on a measurement value of a reference signal measured by the first device being greater than or equal to a threshold value configured by the network device.

26. The method according to any one of claims 21 to 25, wherein the third signal is carried in at least one of:
an MAC header;
an MAC payload;
an MAC CE; or
an RRC message.

27. A method for processing information, comprising:
sending, by a network device, a first signal to a first device, wherein the first signal comprises first indication information, and the first indication information is configured to indicate performing missing inventory on the first device; and
determining, by the first device, based on the first signal, whether to send a second signal to the network device.

28. The method according to claim 27, further comprising:
sending, by the network device, a third signal to the first device;
determining, by the first device, to send a fourth signal based on the third signal;
determining, by the network device, a quantity of first devices based on the fourth signal.

29. A network device, comprising:
a first transceiver module, configured to send a first signal, wherein the first signal comprises first indication information, the first indication information is configured to indicate performing missing inventory on a first device; and the first signal is used by the first device to determine whether to send a second signal.

30. A first device, comprising:
a second transceiver module, configured to receive a first signal; wherein the first signal comprises first indication information, and the first indication information is used to perform missing inventory on the first device; and
a second processing module, configured to determine, based on the first signal, whether to send a second signal.

31. A network device, comprising:
one or a plurality of processors;
wherein the network device is configured to execute the method for processing information according to any one of claims 1 to 12.

32. A first device, comprising:
one or a plurality of processors;
wherein the first device is configured to execute the method for processing information according to any one of claims 13 to 26.

33. A communication system, comprising:
a network device and a first device;
wherein the network device is configured to implement the method for processing information according to any one of claims 1 to 12, and the first device is configured to implement the method for processing information according to any one of claims 13 to 26.

34. A storage medium, wherein the storage medium stores instructions, when the instructions are executed on a communication device, the communication device performs the method for processing information according to any one of claims 1 to 12, or claims 13 to 26, or claims 27 to 28.
